# EUROPEAN PATENT SPECIFICATION

(11) **EP 0 812 735 B1**
(45) Date of publication and mention of the grant of the patent: **26.06.2002**
(21) Application number: 97107986.8
(22) Date of filing: 16.05.1997
(51) Int. Cl.: B60R 21/00, B60R 9/00

(54) **A protection device for the rear window of a commercial motor vehicle**
Sicherheitsvorrichtung für die Heckscheibe eines Nutzkraftfahrzeuges
Dispositif de protection pour la vitre arrière d'un véhicule automobile de type commercial

(30) Priority: 12.06.1996 IT TO960131 U
(43) Date of publication of application: 17.12.1997
(73) Proprietor: FIAT AUTO S.p.A., 10135 Torino (IT)
(72) Inventor: Gavagni, Claudio, 10024 Moncalieri (TO) (IT); Piovano, Antonio, 10090 Bruino (TO) (IT)
(74) Representative: Di Francesco, Gianni

(56) References cited:
- US-A- 3 765 713
- US-A- 4 611 824
- US-A- 4 984 837

## Description

The present invention refers to a protecting device for the rear window of a commercial motor vehicle, particularly a pick-up truck.

With the above kind of vehicles, it is necessary to provide some protection to prevent loads placed in the body of the truck from thrusting into the vehicle compartment. Further, it is desirable to make provisions for transporting objects having a very bulky and elongated shape, e.g. ladders, boards or beams. In these cases the load extends over the roof of the vehicle and therefore it is useful to have a resting point on the upper edge of the vehicle compartment, also for binding the load sideways.

In some instances it is also preferable to have at one's disposal also a sort of roll-bar protection in case the vehicle turns over, particularly for vehicles often travelling on steep ground where danger is always present.

According to prior art US-A-4611824, the above three functions have been remitted to a device mounted on the vehicle, which nevertheless is not provided with passages for an electric connection for optional headlights.

It is an object of the present invention to provide a device capable of accomplishing the above discussed functions.

In accordance with one aspect of the invention as claimed, this object is attained by the provision of a protecting device for the rear window of a commercial motor vehicle as claimed in claim 1.

In order that the present invention may be well understood there will now be described a preferred embodiment thereof, given by way of example, reference being made to the accompanying drawings, in which:

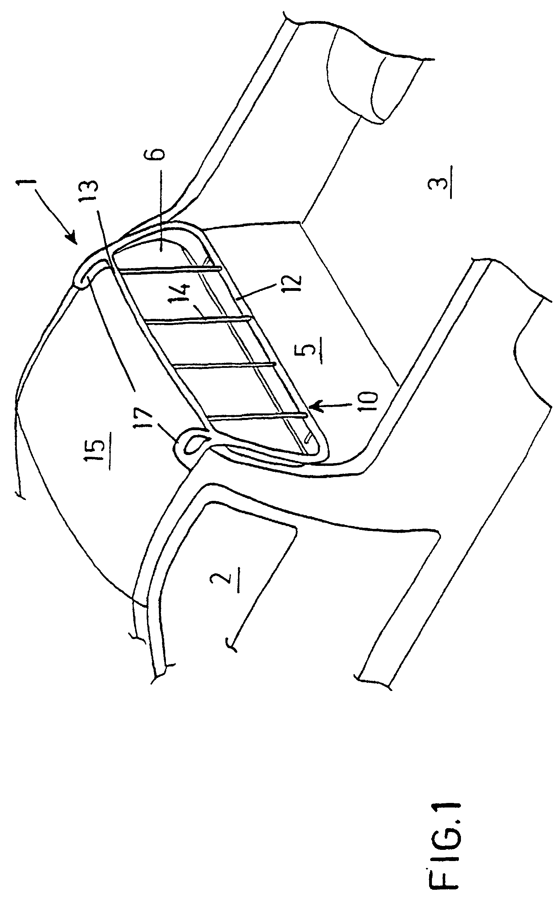

- FIG. 1: is a partial perspective view of a commercial motor vehicle fitted with the device according to the present invention;

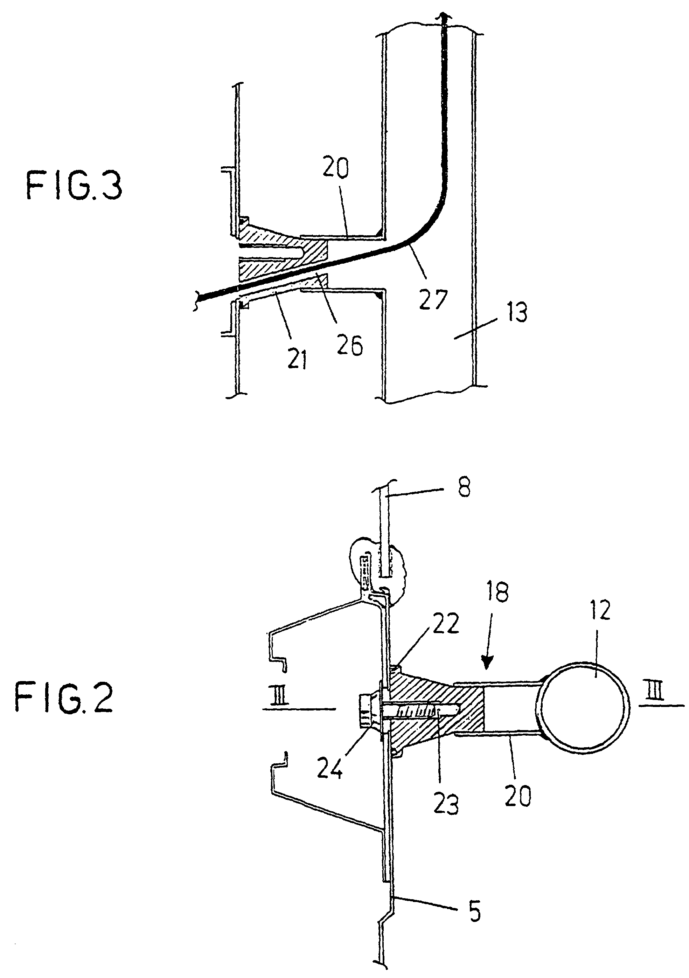

- FIG. 2: is a cross-sectional view of the system for fastening the device on the vehicle of FIG. 1; and
- FIG. 3: is a cross-sectional view taken along the line III-III of FIG. 2.

With reference to the drawings, numeral 1 designates a so-called commercial motor vehicle having a passenger cabin 2 and a body 3 for transporting goods. The rear wall 5 of cabin 2 forms a rear window 6 closed by a glass 8.

The device of this invention is located on wall 5, outside the rear window 6. The protecting device consists of a metal grid 10 made of a metal tube 12 of annular cross-section and of considerable diameter. The metal tube 12 forms a substantially rectangular frame with rounded corners, the longer sides or cross members 13 of the frame being joined by means of a set of transverse bars 14 of smaller diameter. The lower and upper cross members 13 of grid 10 are located at the lower edge of the rear window 6 and along the vehicle roof 15, respectively. Grid 10 is fixed to the vehicle roof 15 in known manner (e.g. using threaded fastening means) through two rounded bosses 17 at the ends of the upper cross member 13, serving as side stopping means for elongated loads extending beyond and resting on the grid.

The lower cross member 13 is connected to the cabin rear wall 5 through supports 18 formed by metal tube portions 20 welded to the cross member 13 and inserted on respective tapered base members 21 each provided with a peripheral sealing gasket 22.

Each base member 21 is further provided with a seat 23 for a bolt 24 securing the base member to the wall 5. Formed in base member 21 is also a passage 26 for an optional electric connection 27 for supplementary headlights located on the top part of the grid.

The disclosed arrangement allows to dispense from performing holes in the remainder of the wall 5, whereby water leakage is prevented and washing the vehicle is made easier.

## Claims

1. A protecting device for the rear window of a commercial vehicle, consisting of a metal grid (10) with a substantially rectangular frame having two bosses (17) at the ends of the upper one of the longer sides or cross members (13) of said frame, said bosses serving as side stopping means for transported loads,
**characterised in that**
said grid (10) is made of a metal tube (12) of considerable diameter forming the substantially rectangular frame, said frame having rounded corners, said longer sides or cross members (13) of said frame being joined therebetween by a set of transverse bars (14) of smaller diameter;
said device is fixed to the vehicle roof (15) by means of said bosses;
and the lower cross member (13) of said grid (10) is connected to the cabin rear wall (5) through supports (18) formed by metal tube portions (20) welded to said lower cross member (13) and inserted on respective tapered base members (21), whereby in said base member (21) there is formed a passage (26) for electrical connection (27) to an electric device mounted on said grid (10).

2. A protecting device as claimed in claim 1, **characterised in that** said base members (21) are provided with a peripheral sealing gasket (22).

## Patentansprüche

1. Sicherheitsvorrichtung für die Heckscheibe eines Nutzkraftfahrzeuges, umfassend ein Metallgitter (10) mit einem im allgemeinen rechtwinkligen Rahmen, der zwei Vorsprünge (17) an den Enden der oberen Seite der langeren Seiten oder Querträger (13) des Rahmens aufweist, wobei die Vorsprünge als Seitenanachlagsmittel für transportierte Waren dienen,
**dadurch gekennzeichnet, daß**
das Gitter (10) aus einem Metallrohr (12) mit einem beträchtlichen Durchmesser hergestellt ist, das den im wesentlichen rechtwinkligen Rahmen bildet, wobei der Rahmen abgerundete Ecken aufweist, wobei die längeren Seiten oder Querträger (13) des Rahmens durch einen Satz von vertikalen Stangen (14) mit kleinerem Durchmesser dazwischen miteinander verbunden sind;
die Vorrichtung (15) mit Hilfe der Vorsprünge an das Fahrzeugdach befestigt ist;
und der untere Querträger (13) des Gitters (10) mit der hinteren Wand der Kabine (5) durch Stützen (18) verbunden ist, die aus Metallrohrabschnitten (20) gebildet sind, die an den unteren Querträger (13) geschweißt und auf entsprechende konische Basisglieder (21) aufgesteckt sind, wobei in den Basisgliedern (21) ein Durchgang (26) für eine elektrische Verbindung (27) mit einer elektrischen Vorrichtung gebildet ist, die auf dem Gitter (10) befestigt ist.

2. Sicherheitsvorrichtung nach Anspruch 1, **dadurch gekennzeichnet, daß** die Basisglieder (21) mit einer Umfangsversiegelungsdichtung (22) versehen sind.

## Revendications

1. Dispositif de protection pour la fenêtre arrière d'un véhicule commercial, consistant en une grille métallique (10) ayant un châssis essentiellement rectangulaire qui présente deux protubérances (17) aux extrémités de celui supérieur des côtés longitudinaux ou éléments de traverse (13) dudit châssis, lesdites protubérances servant de moyens de butée latérale pour les charges transportées,
**caractérisé en ce que** :
ladite grille (10) est faite d'un tube métallique (12) de grand diamètre, formant le châssis essentiellement rectangulaire, ledit châssis présentant des angles arrondis, lesdits côtés longitudinaux ou éléments de traverse (13) dudit châssis étant réunis l'un à l'autre par un jeu de barreaux transversaux (14) de plus petit diamètre;
ledit dispositif est fixé au toit du véhicule (15) au moyen desdites protubérances ;
et l'élément de traverse inférieur (13) de ladite grille (10) est relié à la paroi arrière de cabine (5) au moyen de supports (18) constitués par des portions de tube métallique (20) qui sont soudées audit élément de traverse inférieur (13) et insérés sur des éléments de base respectifs de forme conique (21), ce par quoi il est formé dans lesdits éléments de base (21) un passage (26) pour un raccordement électrique (27) à un dispositif électrique monté sur ladite grille (10).

2. Dispositif de protection selon la revendication 1, **caractérisé en ce que** lesdits éléments de base (21) sont équipés d'une garniture d'étanchéité périphérique (22).
